Europäisches Patentamt

European Patent Office

Office européen des brevets

(19)

(11) Numéro de publication : **0 416 969 B1**

(12)

# FASCICULE DE BREVET EUROPEEN

(45) Date de publication du fascicule du brevet :
**16.03.94 Bulletin 94/11**

(51) Int. Cl.⁵ : **C09K 13/06, C02F 1/20**

(21) Numéro de dépôt : **90402269.6**

(22) Date de dépôt : **08.08.90**

(54) **Nouvelles émulsions eau dans huile et leur application à l'élimination du sulfure d'hydrogène.**

(30) Priorité : **05.09.89 FR 8911586**

(43) Date de publication de la demande :
**13.03.91 Bulletin 91/11**

(45) Mention de la délivrance du brevet :
**16.03.94 Bulletin 94/11**

(84) Etats contractants désignés :
**AT BE CH DE DK ES FR GB GR IT LI LU NL SE**

(56) Documents cités :
**EP-A- 0 012 478**
**US-A- 2 606 873**
**US-A- 4 310 435**
**US-A- 4 680 127**

(73) Titulaire : **SOCIETE FRANCAISE HOECHST**
**TOUR ROUSSEL HOECHST 1 Terrasse Bellini**
**F-92800 Puteaux (FR)**

(72) Inventeur : **Mabire, Frédéric**
**35, Avenue Laplace**
**F-94110 Arcueil (FR)**

(74) Mandataire : **Rinuy, Santarelli**
**14, avenue de la Grande Armée**
**F-75017 Paris (FR)**

## Description

La présente invention concerne de nouvelles émulsions eau dans huile et leur application à l'élimination du sulfure d'hydrogène.

Les produits fossiles, et notamment le pétrole brut, contiennent souvent des quantités importantes de sulfure d'hydrogène, $H_2S$, qu'il est souhaitable d'éliminer le plus rapidement possible car c'est un gaz toxique, corrosif, inflammable et explosible.

On sait qu'il est possible de réduire les taux de sulfure d'hydrogène présent dans des milieux aqueux par l'emploi de solutions aqueuses d'aldéhydes tels que le formaldéhyde, le glyoxal, le glutaraldéhyde (voir par exemple le brevet des Etats-Unis d'Amérique N°4.680.127 ainsi que les références citées dans ce même document). Toutefois, ces produits agissent lentement même à des doses élevées. C'est donc un inconvénient majeur à leur emploi, notamment pour le traitement des bruts pétroliers sur les plates-formes off-shore.

Or, la Demanderesse a découvert avec étonnement de nouvelles compositions obviant à ces inconvénients.

Les compositions selon la présente invention sont caractérisées en ce que ce sont des émulsions eau dans huile contenant pondéralement environ :
- 20 à 80 % d'une phase aqueuse dispersée contenant environ 20 à 70 % d'un ou de plusieurs aldéhydes choisis dans le groupe constitué par le formaldéhyde, le glyoxal, le glutaraldéhyde, le glycolaldéhyde ou l'acide glyoxylique et 80 à 30 % d'une solution aqueuse contenant 90 à 100 % d'eau et 10 à 0 % d'un agent tampon pH = 5,5 ± 1,5 et
- 80 à 20 % d'une phase huile continue contenant environ 90 à 99 % d'un ou plusieurs hydrocarbures saturés et liquides en $C_6$-$C_{16}$, et 10 à 1 % d'un système émulsifiant constitué par un ou plusieurs émulsifiants eau dans huile.

Dans le présente description, on désigne par émulsifiant eau dans huile, tout agent émulsifiant eau dans huile conventionnel, comme le monostéarate de sorbitanne, le monooléate de sorbitanne, le sesquioléate de sorbitanne et les substances dites à faible balance hydrophile/lipophile qui sont toutes étudiées dans la littérature et qui sont citées notamment dans Kirk-Othmer Encyclopedia of Chemical Technology, 3ème édition, volume 8, pages 910-916.

On peut choisir le ou les hydrocarbures saturés et liquides en $C_6$-$C_{16}$, parmi les alcanes en $C_6$-$C_{16}$, à chaîne droite ou ramifiée et les cycloalcanes en $C_6$-$C_{16}$, éventuellement substitués par un ou plusieurs groupements alkyles linéaires ou ramifiés renfermant de préférence de 1 à 5 atomes de carbone. Préférentiellement, ou utilise un solvant paraffinique à chaîne linéaire en $C_{10}$-$C_{13}$ présentant un point d'ébullition compris entre 180 et 270°C.

On peut utiliser tout agent tampon pH = 5,5 ± 1,5 conventionnel tels que ceux décrits dans la littérature comme les couples acide acétique - acétate de sodium, phosphate de potassium - citrate de sodium, dihydrogénophosphate de potassium - hydrogénophosphate de disodium, acide citrique - hydrogénophosphate de disodium. Préférentiellement, ou utilise un agent tampon pH = 5,5 acide acétique - acétate de sodium.

L'invention a plus particulièrement pour objet les compositions telles que définies ci-dessus, caractérisées en ce que l'aldéhyde est le glyoxal.

L'invention a notamment pour objet les composition selon la présente invention sous forme d'émulsions eau dans huile, contenant pondéralement :
- 60 ± 5 % d'une phase aqueuse dispersée, tamponnée à pH = 5,5 avec le couple acide acétique-acétate de sodium et contenant 40 à 50 % de glyoxal,
- 40 ± 5 % d'une phase huile continue contenant 93 à 98 % d'un mélange d'hydrocarbures saturés et liquides en $C_{10}$-$C_{13}$ et 7 à 2 % d'un système émulsifiant constitué par un ou plusieurs émulsifiants eau dans huile.

Parmi ces compositions, on peut citer plus particulièrement une composition sous forme d'émulsion eau dans huile contenant pondéralement :
- 60 % d'une phase aqueuse tamponnée à pH = 5,5 et contenant environ 40 % de glyoxal,
- 40 % d'une phase huile constituée environ par 95 % d'un solvant paraffinique à chaîne linéaire en $C_{10}$-$C_{13}$ présentant un point d'ébullition compris entre 180 et 270°C et 5 % de sesquioléate de sorbitanne.

Selon l'invention, les compositions citées ci-dessus peuvent être préparées par un procédé caractérisé en ce que l'on émulsionne de manière conventionnelle, à la température ambiante, la solution aqueuse, éventuellement tamponnée au pH désiré, de l'aldéhyde (ou des aldéhydes) choisi(s) dans la phase huile contenant en solution le ou les émulsifiant(s) choisi(s).

Les compositions selon la présente invention sont dotées d'intéressantes propriétés pour éliminer le sulfure d'hydrogène présent dans divers fluides et notamment elles sont particulièrement efficaces pour éliminer le sulfure d'hydrogène existant dans des bruts pétroliers qui peuvent se présenter sous forme d'émulsions eau

2

dans huile ou huile dans eau. Ces propriétés justifient l'emploi des compositions selon la présente invention dans un procédé pour éliminer le sulfure d'hydrogène présent dans un fluide aussi bien liquide que gazeux, procédé caractérisé en ce que l'on traite ce fluide avec une composition selon la présente invention.

Dans des conditions préférentielles de mise en oeuvre de l'invention, le procédé ci-dessus décrit est réalisé à la température ambiante, soit par simple mélange de fluide avec la composition de l'invention, lorsque celui-là est liquide, soit par barbotage du fluide dans la composition de l'invention lorsque celui-là est gazeux.

Les exemples suivants illustrent la présente invention, sans toutefois la limiter.

Les teneurs en sulfure d'hydrogène ont été déterminées par dosage potentiométrique à l'aide d'une électrode d'argent, selon la procédure suivante :

On mélange à la température ambiante :

- 100 ml d'acétone,
- 20 ml d'alcool isopropylique,
- 5 ml d'une solution aqueuse à 20 % de nitrate d'ammonium.

Puis, dans cette solution soigneusement désoxygénée par un barbotage d'azote, on introduit 50 ml de l'échantillon à doser, préalablement désoxygéné par un barbotage d'azote. Le milieu réactionnel obtenu est ensuite dosé sous agitation, en atmosphère inerte, avec une solution aqueuse de nitrate d'argent 0,1 N, en suivant la courbe du potentiel de mélange en fonction du volume, V, de la solution de nitrate d'argent introduit, à l'aide d'un potentiomètre équipé d'une électrode de mesure en argent et d'une électrode de référence, Ag/AgCl dont l'électrolyte externe est une solution éthanolique saturée en nitrate d'ammonium. Au point d'équivalence, on obtient la concentration en sulfure d'hydrogène de l'échantillon, exprimée en mg/l, par l'équation (1) :

$$[H_2S] \text{ mg/l } = V \times \frac{32 \times 0,1 \times 1000}{50} = 64V$$

## Exemple 1

A l'aide d'une turbine tournant à la vitesse de 10 000 tours par minute, on émulsionne à la température ambiante 600 g d'une solution aqueuse de glyoxal à 40 % en poids dans un mélange de 380 g d'alcanes normaux en $C_{10}$-$C_{13}$, présentant un point d'ébullition compris entre 180 et 270°C et 20 g de sesquioléate de sorbitanne. On obtient ainsi 1 kg d'une émulsion eau dans huile contenant pondéralement 38 % d'huile, 36 % d'eau, 24 % de glyoxal et 2 % d'émulsifiant et présentant à 20°C, une densité de 1,05 et une viscosité Brookfield de 240 mPa.s (vitesse 20 tr/min., axe 2). Cette composition contient 4,135 moles de glyoxal, soit 4,135 mmoles de glyoxal par gramme.

## Exemple 2

A l'aide d'une turbine tournant à la vitesse de 10 000 tours par minute, on émulsionne, à la température ambiante, 600 g d'une solution aqueuse contenant 240 g (4,135 moles) de glyoxal, 6 g d'acide acétique et 6 g d'acétate de sodium anhydre et présentant un pH de 5,5 dans un mélange de 380 g d'alcanes normaux en $C_{10}$-$C_{13}$ présentant un point d'ébullition compris entre 180 et 270°C et de 20 g de sesquioléate de sorbitanne. On obtient ainsi 1 kg d'une émulsion eau dans huile contenant pondéralement 38 % d'huile, 34,8 % d'eau, 24 % de glyoxal, 2 % d'émulsifiant et 1,2 % de tampon, présentant à 20°C une densité de 1,05 et une viscosité Brookfield de 260 mPa.s (vitesse 20 tr/min., axe 2). Cette composition contient 4,135 mmoles de glyoxal par gramme.

## Exemple 3

On traite, sous agitation, à la température ambiante, un litre d'un pétrole léger issu d'un puits de production situé en mer du Nord et contenant 253 mg/l soit 7,42 mmoles/l de sulfure d'hydrogène avec, soit 2 g d'une solution aqueuse commerciale de glyoxal à 40 % en poids, désignée A, soit 0,5 g ou 2 g de la composition décrite à l'exemple 1, désignée Ex 1, et l'on suit par dosage potentiométrique le pourcentage de sulfure d'hydrogène éliminé en fonction du temps exprimé en minutes.

Les résultats obtenus sont donnés dans le tableau I dans lequel R représente le rapport molaire sulfure d'hydrogène/glyoxal.

Tableau I

| Doses | | A | Ex 1 | |
|---|---|---|---|---|
| | | 2 g/l | 0,5 g/l | 2 g/l |
| Temps en minutes | R | 0,54 | 3,59 | 0,89 |
| 0 | | 0 | 0 | 0 |
| 5 | | 9 | 23 | 42 |
| 15 | | 22 | 47 | 72 |
| 30 | | 31 | 52 | 83 |
| 60 | | 48 | 61 | 92 |

A la dose de 2 g/l, la composition selon l'invention permet une élimination quasi totale du sulfure d'hydrogène en 60 minutes alors que la solution aqueuse de glyoxal, A, contenant 1,66 fois plus de glyoxal n'en élimine dans le même temps que la moitié. La composition selon la présente invention est donc nettement plus efficace qu'une solution aqueuse de glyoxal de l'art antérieur.

**Exemple 4**

On traite sous agitation, à la température ambiante, un litre de pétrole léger issu d'un puits de production situé en mer du Nord et contenant 209 mg/l, soit 6,13 mmoles/l de sulfure d'hydrogène avec soit 2 g d'une solution aqueuse commerciale de glyoxal à 40 % en poids, désignée A, soit 2 g d'une solution aqueuse de glyoxal tamponnée à pH = 5,5 contenant pondéralement 58% d'eau, 40 % de glyoxal et 2 % d'un mélange 50/50 acide acétique - acétate de sodium anhydre, désignée B, soit 0,5 g ou 2 g de la composition selon l'exemple 2, désignée Ex 2, et l'on suit le pourcentage de sulfure d'hydrogène éliminé en fonction du temps.

Les résultats obtenus sont donnés dans le tableau II, dans lequel R représente le rapport molaire sulfure d'hydrogène/glyoxal.

Tableau II

| Doses | | A | B | EX 2 | |
|---|---|---|---|---|---|
| | | 2 g/l | 2 g/l | 0,5 g/l | 2 g/l |
| Temps en minutes | R | 0,444 | 0,444 | 2,96 | 0,74 |
| 0 | | 0 | 0 | 0 | 0 |
| 5 | | 8 | 12 | 28 | 94 |
| 15 | | 24 | 41 | 49 | 97 |
| 30 | | 37 | 65 | 55 | 98 |
| 60 | | 49 | 85 | 65 | 100 |

A la lecture de ce tableau, on constate l'efficacité particulièrement importante des compositions tamponnées selon la présente invention.

## Exemple 5

On traite sous agitation, à la température ambiante, un litre d'une émulsion eau dans huile issue d'un puits de pétrole de la région parisienne, contenant pondéralement 70 % de pétrole, 30 % d'eau et 241 mg/l, soit 7,07 mmoles/l, de sulfure d'hydrogène avec 2 g soit d'une solution aqueuse commerciale de glyoxal à 40 % en poids, soit de la composition de l'exemple 2 et l'on suit, comme dans les exemples précédents, le pourcentage de sulfure d'hydrogène éliminé en fonction du temps.

Les résultats obtenus sont mentionnés dans le tableau III dans lequel R représente le rapport molaire sulfure d'hydrogène/glyoxal.

## Tableau III

| Doses | A | EX 2 |
|---|---|---|
| | 2 g/l | 2 g/l |
| Temps en minutes  R | 0,51 | 0,85 |
| 0 | 0 | 0 |
| 1 | 0 | 72 |
| 5 | 10 | 87 |
| 15 | 19 | 89 |
| 30 | 30 | 90 |
| 60 | 45 | 95 |

Ces résultats démontrent la bonne efficacité des compositions de la présente invention pour éliminer le sulfure d'hydrogène présent dans une émulsion eau dans huile.

## Exemple 6

En utilisant le mode opératoire décrit à l'exemple 1, on prépare une émulsion eau dans huile contenant pondéralement 38 % d'huile, 37,8 % d'eau, 22,2 % de formaldéhyde et 2 % de sesquioléate de sorbitanne au départ d'une solution aqueuse de formaldéhyde à 37 % en poids et d'alcanes normaux en $C^1_0$-$C_{13}$. L'émulsion obtenue présente une densité à 20°C de 0,95 et une viscosité Brookfield de 55 mPa.s déterminée à 20°C à la vitesse de 20 tours/minute avec l'axe 1.

## Exemple 7

De même, en utilisant le mode opératoire décrit à l'exemple 1, on prépare une émulsion eau dans huile contenant pondéralement 38 % d'huile, 30 % d'acide glyoxylique, 30 % d'eau et 2 % de sesquioléate de sorbitanne au départ d'une solution aqueuse commerciale d'acide glyoxylique à 50 % et d'alcanes normaux en $C_{10}$-$C_{13}$. L'émulsion obtenue présente une densité à 20°C de 1,07 et une viscosité Brookfield de 105 mPa.s déterminée à 20°C à là vitesse de 20 tours/minute avec l'axe 2.

## Exemple 8

L'efficacité de l'émulsion obtenue à l'exemple 6 a été comparée a celle d'une solution aqueuse commerciale de formaldéhyde a 37 % en poids, désignée C, à la dose de 2 g/l, sur un pétrole léger issu d'un puits de production de la mer du Nord contenant 234 mg/l d'$H_2S$. Les résultats obtenus sont mentionnés dans le tableau IV.

Exemple 9

De même, l'efficacité de l'émulsion obtenue à l'exemple 7 a été comparée à celle d'une solution aqueuse commerciale d'acide glyoxylique à 50 % en poids, désignée D, à la dose de 2 g/l sur le même pétrole léger utilisé à l'exemple 8. Les résultats obtenus sont donnés dans le tableau IV.

### Tableau IV

Pourcentages d'élimination d'$H_2S$ en fonction du temps.

| Produits / Temps en minutes | EX.6 | C | EX.7 | D |
|---|---|---|---|---|
| 0 | 0 | 0 | 0 | 0 |
| 5 | 25 | 5 | 6 | 5 |
| 15 | 39 | 14 | 18 | 17 |
| 30 | 71 | 24 | 24 | 21 |
| 60 | 87 | 33 | 38 | 32 |

On constate que les compositions selon la présente invention présentent une meilleure efficacité que la solution aqueuse d'acide glyoxylique ou de formaldéhyde utilisée pour leur préparation.

**Revendications**

1. Emulsions eau dans huile contenant pondéralement environ :
   - 20 à 80 % d'une phase aqueuse dispersée contenant environ 20 à 70 % d'un ou de plusieurs aldéhydes choisis dans le groupe constitué par le formaldéhyde, le glyoxal, le glutaraldéhyde, le glycolaldéhyde ou l'acide glyoxylique et 80 à 30 % d'une solution aqueuse contenant 90 à 100 % d'eau et 10 à 0 % d'un agent tampon pH = 5,5 ± 1,5 et
   - 80 à 20 % d'une phase huile continue contenant environ 90 à 99 % d'un ou plusieurs hydrocarbures saturés et liquides en $C_6$-$C_{16}$, et 10 à 1 % d'un système émulsifiant constitué par un ou plusieurs émulsifiants eau dans huile.

2. Emulsions selon la revendication 1, caractérisées en ce que l'aldéhyde est le glyoxal.

3. Emulsions selon l'une quelconque des revendications 1 et 2, caractérisées en ce qu'elles contiennent pondéralement :
   - 60 ± 5 % d'une phase aqueuse dispersée, tamponnée à pH = 5,5 avec le couple acide acétique-acétate de sodium et contenant 40 à 50 % de glyoxal,
   - 40 ± 5 % d'une phase huile continue contenant 93 à 98 % d'un mélange d'hydrocarbures saturés et liquides en $C_{10}$-$C_{13}$ et 7 à 2 % d'un système émulsifiant constitué par un ou plusieurs émulsifiants eau dans huile.

4. Emulsions selon la revendication 3, caractérisées en ce qu'elles contiennent :

- 60 % d'une phase aqueuse tamponnée à pH = 5,5 et contenant environ 40 % de glyoxal,
- 40 % d'une phase huile constituée environ par 95 % d'un solvant paraffinique à chaîne linéaire en $C_{10}$-$C_{13}$ présentant un point d'ébullition compris entre 180 et 270°C et 5 % de sesquioléate de sorbitanne.

5. Procédé pour éliminer du sulfure d'hydrogène présent dans un fluide au moyen d'un aldéhyde choisi dans le groupe constitué par le formaldéhyde, le glyoxal, le glutaraldéhyde, le glycolaldéhyde ou l'acide glyoxylique , caractérisé en ce que l'on traite ce fluide avec une composition selon l'une quelconque des revendications 1 à 4.

## Patentansprüche

1. Wasser-in-Öl-Emulsionen, gewichtsmäßig ungefähr enthaltend

20 bis 80% einer dispergierten wässrigen Phase, die ungefähr 20 bis 70% eines oder mehrerer Aldehyde, die in der Gruppe, die sich aus Formaldehyd, Glyoxal, Glutaraldehyd, Glycolaldehyd oder Glyoxylsäure zusammensetzt, ausgewählt wird/werden, und 80 bis 30% eine wässrigen Lösung, bestehend aus 90 bis 100% Wasser und 10 bis 0% eines Puffermittels mit einem pH-Wert = 5,5 ± 1,5 enthält, und

80 bis 20% einer kontinuierlichen Ölphase, die ungefähr 90 bis 99% eines oder mehrerer Grenzkohlenwasserstoffe und Flüssigkeiten $C_6$ - $C_{16}$ und 10 bis 1% eines Emulgierungssystems, bestehend aus einem oder mehreren Öl-in-Wasser-Emulgatoren, enthält.

2. Emulsionen nach Anspruch 1, dadurch gekennzeichnet, daß das Aldehyd Glyoxal ist.

3. Emulsionen nach einem der Ansprüche 1 und 2, dadurch gekennzeichnet, daß diese gewichtsmäßig enthalten:

60 ± 5% einer dispergierten wässrigen Phase, gepuffert auf einen pH-Wert = 5,5 mit dem Paar Essigsäure-Natriumacetat und enthaltend 40 bis 50% Glyoxal,

40 ± 5% einer kontinuierlichen Öl-Phase, die 93 bis 98% eines Gemisches aus Grenzkohlenwasserstoffen und Flüssigkeiten $C_{10}$-$C_{13}$ und 7 bis 2% eines Emulgierungssystems, bestehend aus einem oder mehreren Wasser-in-Öl-Emulgatoren, enthält.

4. Emulsionen nach Anspruch 3, dadurch gekennzeichnet, daß sie enthalten:

60% einer wässrigen Phase, gepuffert auf einen pH-Wert = 5,5 und enthaltend ungefähr 40% Glyoxal,

40% einer Ölphase, bestehend zu ungefähr 95% aus einem paraffinischen Lösungsmittel mit linearer Kette $C_{10}$ - $C_{13}$ mit einem Siedepunkt im Bereich von 180 bis 270°C und zu 5% aus Sorbitan-Sesquioleat.

5. Verfahren zur Beseitigung des in einem Fluid vorhandenen Hydrogensulfids mittels eines Aldehyds, das in der Gruppe, die sich aus Formaldehyd, Glyoxal, Glutaraldehyd, Glycolaldehyd oder der Glyoxylsäure zusammensetzt, ausgewählt wird, dadurch gekennzeichnet, daß dieses Fluid mit einer Zusammensetzung nach einem der Ansprüche 1 bis 4 behandelt wird.

## Claims

1. Water-in-oil emulsions containing by weight about :
   - 20 to 80 % of a dispersed aqueous phase containing about 20 to 70 % of one or more aldehydes chosen from the group constituted by formaldehyde, glyoxal, glutaraldehyde, glycolaldehyde or glyoxylic acid and 80 to 30 % of an aqueous solution containing 90 to 100 % water and 0 to 10 % of a buffer agent pH = 5.5 ± 1.5 and
   - 80 to 20 % of a continuous oil phase containing about 90 to 99 % of one or more saturated and liquid C6-C16 hydrocarbons, and 10 to 1 % of an emulsifying system constituted by one or more water-in-oil emulsifying agents.

2. Emulsions according to claim 1, characterized in that the aldehyde is glyoxal.

3. Emulsions according to any one of claims 1 and 2, characterized in that they contain by weight :
   - 60 ± 5% of a dispersed aqueous phase buffered to pH = 5.5 with the acetic acid - sodium acetate pair and containing 40 to 50 % glyoxal.
   - 40 ± 5% of a continuous oil phase containing 93 to 98% of a saturated and liquid $C_{10}$-$C_{13}$ hydrocarbons mixture and 7 to 2% of an emulsifying system constituted by one or more water in oil emulsifying agents.

4. Emulsions according to claim 3, characterized in that they contain :
   - 60% of an aqueous phase buffered to pH = 5.5 and containing about 40% glyoxal,
   - 40% of an oil phase constituted by approximately 95% of a paraffin solvent with a $C_{10}$-$C_{13}$ linear chain with a boiling point comprised between 180 and 270°C and 5% sorbitan sesquioleate.

5. Process for the elimination of the hydrogen sulphide present in a fluid by means of an aldehyde chosen from the group constituted by formaldehyde, glyoxal, glutaraldehyde, glycolaldehyde or glyoxylic acid, characterized in that this fluid is treated with a composition according to any one of claims 1 to 4.